# EUROPÄISCHE PATENTSCHRIFT

(11) **EP 2 736 646 B1**
(45) Veröffentlichungstag und Bekanntmachung des Hinweises auf die Patenterteilung: **23.10.2019**
(21) Anmeldenummer: 12756354.2
(22) Anmeldetag: 26.07.2012
(51) Int. Cl.: B02C 13/30, F16H 37/08, F16H 47/04

(54) **ZERKLEINERUNGSVORRICHTUNG**
COMMINUTION DEVICE
DISPOSITIF DE BROYAGE

(30) Priorität: 26.07.2011 DE 202011103675 U
(43) Veröffentlichungstag der Anmeldung: 04.06.2014
(73) Patentinhaber: Doppstadt Familienholding GmbH, 42555 Velbert (DE)
(72) Erfinder: DOPPSTADT, Johann, 42555 Velbert (DE); BERGER, Horst, 39240 Calbe (DE)
(74) Vertreter: Weidener, Jörg Michael
(86) Internationale Anmeldenummer: PCT/EP2012/003141
(87) Internationale Veröffentlichungsnummer: WO 2013/013819

(56) Entgegenhaltungen:
- DE-A1- 3 312 663
- DE-A1- 3 640 146
- DE-C1- 3 426 083
- DE-U1- 8 406 646

## Beschreibung

Die Erfindung betrifft die Verwendung eines Schredders als Zerkleinerungsvorrichtung für die Zerkleinerung von insbesondere großformatigen Materialien.

Derartige Zerkleinerungsvorrichtungen weisen in der Regel einen Hauptantrieb auf, der eine Drehbewegung für eine mit Gegenwerkzeugen zusammenwirkende Schredder-Welle mit Zerkleinerungswerkzeugen erzeugt. Die Zerkleinerungswerkzeuge wirken mit am Gehäuse oder an Gegenwerkzeugträgern angeordneten Schneidwerkzeugen oder Gegenzerkleinerungswerkzeugen zusammen.

Dabei ist die Drehzahl der Schredder-Welle entweder über die Regelung des Hauptantriebes oder aber durch ein zwischengeschaltetes Getriebe veränderbar. Eine stufenlose Veränderbarkeit ist in der Regel nur durch spezielle Elektromotoren, wie beispielsweise Thyristor-Motoren möglich. Bei der Zwischenschaltung von entsprechenden Getrieben ist bisher nur eine Regelbarkeit in bestimmten Schaltstufen möglich. Dazu wird es dann gegebenenfalls noch notwendig, eine Kupplung zwischenzuschalten, um Störungen beziehungsweise einen hohen
Verschleiß am Schaltgetriebe zu verhindern. Dies erhöht die Störanfälligkeit und insbesondere den Herstellungsaufwand der Zerkleinerungsvorrichtung.

Bei der Zerkleinerung von großformatigen Materialien wie beispielsweise Holzabfällen oder dergleichen, kommt es häufig vor, dass die Belastung der Zerkleinerungsvorrichtung so hoch wird, dass der Hauptantrieb der Zerkleinerungsvorrichtung die Zerkleinerungsaufgabe nicht mehr zu leisten vermag und entweder durch eine entsprechende Kupplung von der Zerkleinerungsvorrichtung getrennt wird oder in Form von Rutschkupplungen eine Zerstörung der Zerkleinerungsvorrichtung beziehungsweise eine Beschädigung derselben vermieden wird. Auch ist es dann häufig gewünscht, wenn sich ein zu zerkleinerndes Gut verklemmt hat, einen Rücklauf beispielsweise zu ermöglichen, was bei Elektrooder Dieselmotorantrieb nur recht schwer möglich ist, weshalb hier dann die Verstopfung, die zum Verklemmen beziehungsweise zum Stillstand der Zerkleinerungsvorrichtung führte, händisch zu beseitigen ist. Dazu muss selbstverständlich aus Sicherheitsgründen der Hauptantrieb abgeschaltet werden. Entsprechende Elektromotoren sind beispielsweise nicht überall einsetzbar, weil die notwendige Elektroenergie an den Orten, wo die Zerkleinerungsvorrichtung bestimmungsgemäß eingesetzt ist, nicht vorhanden ist. Aus diesem Grund hat es sich durchgesetzt, Verbrennungsmotoren, wie beispielsweise Dieselmotoren, hier einzusetzen. Aus den Druckschriften DE 34 26 083 C1 und DE 10 2005 037 668 B4 sind Lösungen gemäß des Oberbegriffs von Patentanspruch 1 bekannt.

Die DE 3 426 083 C1 betrifft eine Antriebsvorrichtung für eine Schlagradmühle. Die Antriebsvorrichtung enthält eine Schlagradwelle zur fliegenden Lagerung eines Schlagrades, eine Lagervorrichtung mit mindestens zwei mit axialem Abstand voneinander angeordneten Lagern, in welchen die Schlagradwelle gelagert ist, und ein Getriebe zum Antreiben der Schlagradwelle. Das Getriebe ist ein Planetengetriebe mit einem an ein Abtriebsorgan anschließbaren Antriebsteil, mit einem die Schlagradwelle antreibenden Abtriebsteil, und mit einem zur Drehmomentübertragung vom Antriebsteil zum Abtriebsteil dienenden Reaktionsteil.

Die DE 3 640 146 A1 betrifft ein Überlagerungssystem zur Erzeugung einstellbarer Drehzahlen. Das Überlagerungssystem weist ein Planten-Dreiwellengetriebe auf.

Die DE 3 312 663 A1 betrifft einen stufenlos regelbaren Antrieb. Der Antrieb besteht aus einem Hauptmotor, einer Hydrostatik-Einheit mit verstellbarer Pumpe und Konstantmotor und einem Planetenüberlagerungsgetriebe.

Die DE 8 406 646 U1 betrifft eine Antriebseinrichtung mit varibler Gesamtübersetzung, welche ein Überlagerungsgetriebe mit einem Leistungspfad mit konstanter Übersetzung und einem Leistungspfad mit variabler Übersetzung aufweist.

Ausgehend von diesem Stand der Technik ist es Aufgabe der Erfindung, eine Zerkleinerungsvorrichtung vorzuschlagen, die die im Stand der Technik beschriebenen Nachteile nicht mehr aufweist und die kostengünstiger herzustellen ist.

Die Aufgabe der Erfindung wird gelöst durch die Verwendung eines Schredders als Zerkleinerungsvorrichtung für insbesondere großformatige Materialien gemäß dem Anspruch 1.

Die Zerkleinerungsvorrichtung weist einen Hauptantrieb, der eine Drehbewegung für eine Schredder-Welle mit Zerkleinerungswerkzeugen erzeugt, auf, wobei die Drehzahl der Schredder-Welle mittels eines zwischen Hauptantrieb und Schredder zwischengeschalteten Getriebes veränderbar ist, wobei als Getriebe ein Planeten-Überlagerungsgetriebe, bevorzugt ein hydrostatisches Überlagerungsgetriebe vorgesehen ist, wobei der Hydraulik-Motor als Zusatzantriebsaggregat in zwei unterschiedlichen Drehrichtungen beaufschlagbar ist. Durch diese Ausgestaltung gelingt es problemlos, jetzt auch ohne den Einsatz eines drehzahlgesteuerten Hauptantriebes eine Drehzahlveränderung zu erreichen. Es ist auch erreichbar, dass man eine Rückwärtsbewegung der Schredder-Welle erzeugen kann, ohne dass man eine Umschaltung in Form eines entsprechenden speziellen Schaltgetriebes benötigt oder aber durch eine Umpolung beispielsweise eines Elektromotors, was ein vorheriges Abschalten voraussetzt, diese Rückwärtsbewegung erzeugt. Bei Dieselmotoren beziehungsweise Verbrennungsmotoren ist eine solche Umkehr der Drehbewegung im Stand der Technik überhaupt nicht möglich. Vielmehr war es notwendig, hier den Hauptantrieb abzuschalten, um dann bei einer Verstopfung beziehungsweise Verklemmung von zu zerkleinernden Material in der Zerkleinerungsvorrichtung diese manuell wieder zu beseitigen. Neben den auftretenden Stillstandszeiten, die durch die erfindungsgemäße Lösung jetzt vermieden werden, ist auch eine Verbesserung des Arbeitsschutzes insgesamt gegeben. Durch die Vermeidung des möglichen Stillstandes der Zerkleinerungsvorrichtung und der Möglichkeit der Umkehr der Drehrichtung ist es möglich, die Verstopfung und oder Verklemmung nun durch den Rücklauf der Zerkleinerungsvorrichtung, das heißt eine Änderung der Drehrichtung der Schredder-Welle zu beseitigen. Ein weiterer Vorzug der so gestalteten Lösung ist, dass das Getriebe der Zerkleinerungsvorrichtung auch als Anlaufregelgetriebe verwendet werden kann, indem das Planeten-Überlagerungs-getriebe beziehungsweise das hydrostatische Überlagerungsgetriebe als Anlaufregelgetriebe gefahren beziehungsweise eingestellt wird. Demzufolge kann jetzt der Hauptantrieb auch unter Last gestartet werden, ohne dass dies zu einer Beeinträchtigung an der Zerkleinerungsvorrichtung selbst führt, da durch diese geschickte erfindungsgemäße Lösung eine Selbstregelung der Drehzahl der Schredder-Welle der Zerkleinerungsvorrichtung erreicht wird. Die Erfindung ist demnach dadurch gekennzeichnet, dass der Hydraulik-Motor als Zusatzantriebsaggregat in zwei unterschiedliche Drehrichtungen beaufschlagbar ist. Dies kann man dadurch erreichen, indem man die Hydraulikpumpe, die den Hydraulik-Motor versorgt, in ihrer Drehrichtung beziehungsweise Flussrichtung umschaltet oder indem man ein entsprechendes Umschaltventil mit den dazu notwendigen Leitungen, wie beispielsweise ein Dreiwegeventil oder dergleichen vorsieht, um hier eine Umschaltung des Hydraulikflusses damit der Versorgung des Hydraulikmotors zu erreichen.

Erfindungsgemäß ist vorgesehen, dass der Hydraulik-Motor als Zusatzantriebsaggregat für ein Überlagerungszweig des Überlagerungsgetriebes an dem Planeten-Überlagerungsgetriebe vorgesehen ist.

Erfindungsgemäß ist des Weiteren vorgesehen, dass der Überlagerungszweig des Planeten-Überlagerungsgetriebes ein Hohlrad umfasst, an dem das Zusatzantriebsaggregat, nämlich der Hydraulik-Motor, angreift.

Erfindungsgemäß ist vorgesehen, dass sich die Drehzahl und/oder die Drehrichtung des Hydraulik-Motor als Zusatzantriebsaggregat aufgrund der Belastung der Zerkleinerungsvorrichtung, nämlich des Schredders, verändert und die Drehzahl der Zerkleinerungsvorrichtung sich in Abhängigkeit von der zuleistenden Zerkleinerungsleistung demnach selbst regelt.

Ferner ist erfindungsgemäß vorgesehen, dass die Drehrichtung der Zerkleinerungsvorrichtung durch die unterschiedliche Beaufschlagung des Hydraulik-Motors veränderbar und umkehrbar ist. Dies erfolgt beispielsweise durch Umschalten der Hydraulikflüssigkeitszufuhr oder aber durch Umkehr der Drehrichtung des Pumpenantriebes.

Wie bereits erwähnt ist ein weiterer Aspekt der Erfindung dadurch angegeben, dass als Hauptantrieb ein Verbrennungsmotor vorzugsweise ein Dieselmotor, aber auch ein Elektromotor dergleichen vorgesehen ist. Dieser Hauptantrieb stellt für die erfindungsgemäße Zerkleinerungsvorrichtung eine Leistung von 130 bis 500 KW zur Verfügung. Bevorzugt ist es dabei, wenn eine Leistung von 350 KW zur Verfügung steht und dabei eine Drehzahl von 1500 bis 2000 Umdrehungen pro Minute erreicht werden.

Die Erfindung ist gemäss einer vorteilhaften Ausgestaltung dadurch gekennzeichnet, dass der Hauptantrieb eine konstante Drehzahl aufweist. Selbstverständlich ist es auch möglich, für die erfindungsgemäße Zerkleinerungsvorrichtung einen Hauptantrieb mit einer stufenloser Regelbarkeit einzusetzen. Hierbei wäre beispielsweise ein Thyristormotor bevorzugt. Da allerdings Elektromotoren ihrem Einsatzbereich beschränkt sind, und zwar hinsichtlich des Standortes der Zerkleinerungsvorrichtung, wird in der Regel ein Verbrennungsmotor insbesondere bevorzugt ein Dieselmotor eingesetzt, der in seiner Drehzahl nicht regelbar ist.

Der Hydraulikmotor wird bei einer bevorzugten Ausgestaltung der Erfindung von einer Hydraulikpumpe versorgt, die Hydrauliköl als Antriebsmedium beispielsweise zu dem Hydraulik-Motor fördert. Insgesamt umfasst demzufolge der Antrieb für die erfindungsgemäße Zerkleinerungsvorrichtung erstens einen Hauptantrieb, zweitens einen Hydraulikmotor für den Überlagerungszweig des Überlagerungsgetriebes und drittens eine Hydraulikpumpe zur Versorgung des Hydraulikmotors.

Das Hohlrad wirkt erfindungsgemäß mit wenigstens ein Planeten-Rad zusammen, welches seinerseits auf ein Zentralrad des Planeten-Überlagerungsgetriebes wirkt. Dadurch dass eine Hydraulikpumpe den Hydraulik-Motor als Zusatzantriebsaggregat versorgt, welche mit dem Hauptantrieb der Zerkleinerungsvorrichtung zusammenwirken, ist es gegeben, dass die vorher bereits beschriebenen erfindungsge-mäßen Vorteile erreicht werden. Durch diese Art und Weise der Ausgestaltung ist es nämlich möglich, zu der stufenlosen Regelbarkeit des Planeten Überlagerungsgetriebes beziehungsweise des hydrostatischen Überlagerungsgetriebes zu gelangen. Durch die geschickte Art und Weise der Anordnung von Hydraulikpumpe, Hydraulik-Motor und Hauptantrieb ist es zudem gegeben, dass der erwünschte Selbstregelungseffekt eintritt, indem nämlich durch die Regelung der Drehzahl des Hydraulik-Motors die Drehzahl der Antriebs-Welle für die Zerkleinerungsvorrichtung insgesamt stufenlos regelbar ist. Des Weiteren ist durch diese Anordnung die Drehrichtung auch umkehrbar. Dies wird insbesondere durch die Regelung des Hydraulikflusses des Antriebsmediums des HydraulikMotors geregelt. Es ist beispielsweise möglich, die Drehrichtung des HydraulikMotors umzukehren, um dadurch zu erreichen, dass auch eine Umkehrdrehrichtung der Schredder-Welle erreicht werden kann, ohne den Hauptantrieb in irgendeiner Weise zu verändern. Dies sind erfindungsgemäße Vorteile, die im Stand der Technik so noch nicht bekannt sind.

Die Erfindung zeichnet sich weiterhin dadurch aus, dass die Drehzahl und/oder die Drehrichtung des Hydraulik-Motors als Zusatzantriebsaggregat insbesondere durch die Erhöhung oder Reduzierung des Flüssigkeitsstromes des Antriebsmediums stufenlos regelbar ist. Dies kann man durch entsprechende Überoder Untersetzungen des Antriebs der Hydraulikpumpe erreichen. Dies kann man allerdings auch dadurch erreichen, indem man eigenen Antrieb für die Hydraulikpumpe vorsieht, der entsprechend beeinflussbar ist.

Ein weiterer Aspekt der erfindungsgemäßen Lösung ist dadurch angegeben, dass die Hydraulikpumpe von dem Hauptantrieb angetrieben wird oder ein eigener Pumpenantrieb für die Hydraulikpumpe vorgesehen ist. Dies wurde vorher bereits erwähnt. Die Erfindung ist hier allerdings auf eine einzige Ausgestaltung nicht eingeschränkt, sondern umfasst alle beschriebenen Möglichkeiten und zwar nebengeordnet gleichberechtigt.

Durch die geschickte Anordnung der erfindungsgemäßen Zerkleinerungsvorrichtung beziehungsweise deren Bestandteile ist es möglich, dass der HydraulikMotor derart ausgebildet und angeordnet ist, dass er durch die Erhöhung oder Verminderung des Drucks des Antriebsmedium auf Veränderungen des Drehmomentes bei der Veränderung der Belastung der Zerkleinerungsvorrichtung, zum Beispiel des Schredders, reagiert.

Erfindungsgemäß wurde weiter gefunden, dass es von Vorteil ist, wenn es eine Überlastsicherung vorgesehen ist, die den Druck des Antriebsmediums überwacht und bei einem gewählten Überdruck öffnet. Dieser Überdruck wird nach der bevorzugten Ausgestaltung nach der erfindungsgemäßen Zerkleinerungsvorrichtung mit circa 400 bar eingestellt.

Ein weiterer Aspekt der erfindungsgemäßen Zerkleinerungsvorrichtung ist des Weiteren dadurch angegeben, dass das Planeten-Überlagerungsgetriebe beziehungsweise das hydrostatische Überlagerungsgetriebe als Anlaufregelgetriebe, insbesondere um Anlaufen des Hauptantriebes unter Last vorgesehen ist. Mit dieser Ausgestaltung gelingt es, selbst unter Last die gesamte Zerkleinerungsvorrichtung zum Laufen zu bringen, ohne dass beispielsweise noch zu zerkleinerndes Gut der Zerkleinerungsvorrichtung wieder entfernt werden muss. Dies ist ins-besondere nach Störungsbeseitigungen von Vorteil. Dies bringt auch insgesamt den Vorteil, dass die Zerkleinerungsvorrichtung einem geringeren Verschleiß unterliegt, als Lösungen des Standes der Technik.

Die Erfindung wird nachfolgend anhand von Ausführungsbeispielen weiter beschrieben. Es zeigen:
- Fig. 1a und 1b: Ausführungsform eines Teiles der erfindungsgemäßen Zerkleinerungsvorrichtung
- Fig. 2: schematische Darstellung des Überlagerungsgetriebes für die Zerkleinerungsvorrichtung nach der Erfindung

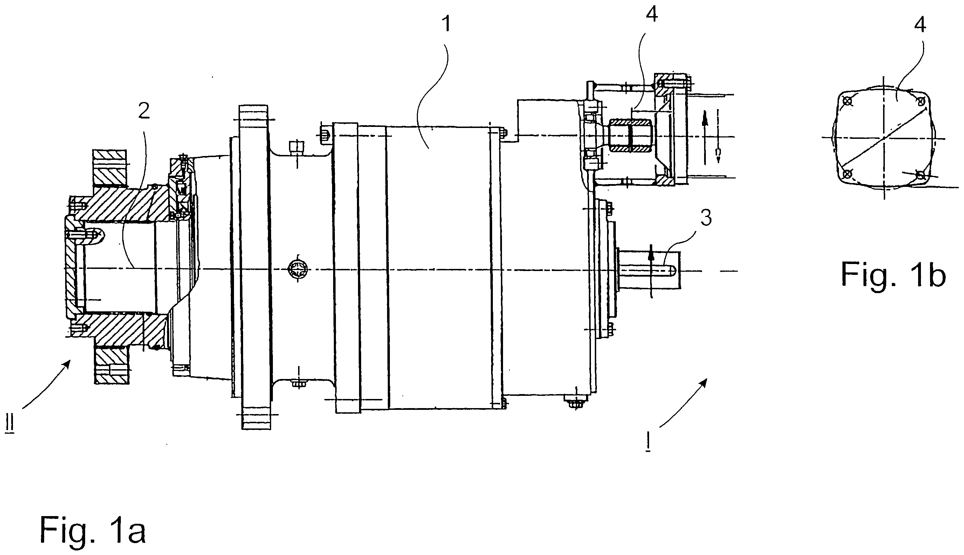

Die Fig. 1a und 1b zeigen eine Ausführungsform eines Teiles der erfindungsgemäßen Zerkleinerungsvorrichtung, hier nämlich ein Getriebe mit Hydraulik-Motor sowie den entsprechenden Wellenanschiüssen für den Anschluss des Hauptantriebes sowie für den Anschluss der Zerkleinerungsvorrichtung selbst.

Als Getriebe 1 ist hier beispielsweise ein Planeten-Überlagerungsgetriebe vorgesehen, welches bevorzugt ein hydrostatisches Überlagerungsgetriebe ist. Das Bezugszeichen 3 bezeichnet die Welle für den Anschluss des Hauptantriebes I. Dieser ist mit dem Bezugszeichen I und einen Pfeil nur schematisch angedeutet. Auf der anderen Seite des Getriebes 1 befindet sich eine Schredder-Welle 2, die zum Anschluss eines nicht gezeigten Schredders II dient. Dieser Schredder II ist ebenfalls nur schematisch mit den Bezugszeichen II und einem Pfeil angedeutet. Wie ersichtlich ist auf der rechten Seite der Darstellung der Fig. 1a ein HydraulikMotor 4 vorgesehen, der in der Fig. 1b nur einmal in der Vorderansicht zu sehen ist.

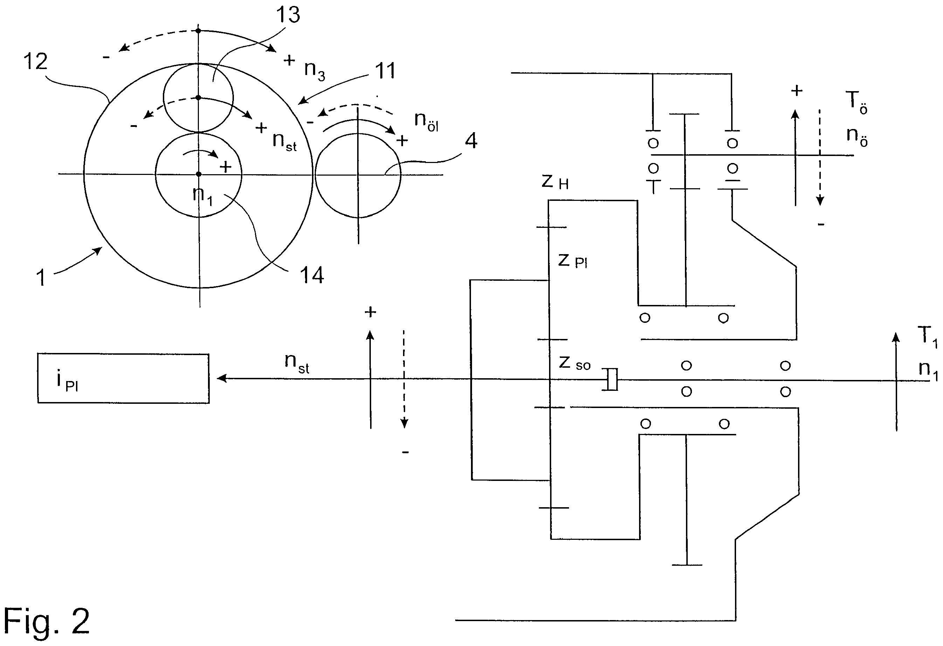

Der konstruktive Aufbau des Getriebes für die erfindungsgemäße Zerkleinerungsvorrichtung ergibt sich im Wesentlichen aus der Fig. 2. Die Fig. 2 zeigt eine grafische Darstellung einer Ausführungsform für das Getriebe der erfindungsge-mäßen Zerkleinerungsvorrichtung. Hierbei handelt es sich um eine normale Grafik, die für Getriebe üblich ist. Mit dem Bezugszeichen 1 ist hier wieder das Planeten-Überlagerungsgetriebe bezeichnet. Dieses umfasst (siehe Fig. 2 oben links) einen Überlagerungszweig 11. An diesem Überlagerungszweig 11 greift das Zusatzantriebsaggregat, hier ein Hydraulik-Motor 4 an. Der Hydraulik-Motor 4 wird von einer hier nicht gezeigten Hydraulikpumpe mit dem entsprechenden Antriebsmedium, wie zum Beispiel Hydrauliköl, versorgt. Der Überlagerungszweig 11 des Planeten-Überlagerungsgetriebe 1 umfasst des Weiteren ein Hohlrad 12, welches ebenfalls mit einem Kreis schematisch dargestellt ist. Das Hohlrad 12 wirkt wiederum mit einem Planeten-Rad 13 zusammen, welches seinerseits auf ein Zentralrad 14 wirkt. Selbstverständlich ist es auch möglich, wie bei Planetengetrieben üblich, mehrere Planeten-Räder einzusetzen. Für die schematische Darstellung soll allerdings ein Planeten-Rad 13 hier ausreichen. Mit den gestrichelten Pfeilen beziehungsweise durchgehenden Pfeilen am Hohlrad 12, die mit Pius und Minus bezeichnet sind, wird die Drehzahl des Hohlrades 12 bezeichnet.

Ebenfalls mit den Pfeilen gestrichelt beziehungsweise durchgehend am Hydraulik-Motor 4 wird die Drehzahl des Hydraulik-Motor bezeichnet, welches zusätzlich die Bezeichnung nö| enthält. Des Weiteren ist mit Plus und Minus und nt der Drehzahlbereich der Stufe, in diesem Fall der ersten Stufe, angezeigt, n₁ betrifft die Drehzahl des Zentralrades. In der Darstellung der Grafik deuten die Großbuchstaben ZH Hohlrad ZPL Planetenrad und weiter unten beziehungsweise in Mittelachse Zso Sonnenrad. Auf der rechten Seite ist mit das Drehmoment des Hauptantriebes I bezeichnet, während darunter die Drehzahl des Hauptantriebes dargestellt beziehungsweise angedeutet ist. Mit Töi und nöi sind zum Einen das Drehmoment des Hydraulik-Motors und zum Anderen die Drehzahl des OI-Motors gezeichnet. An dem Pfeil in Richtung ipi ist die Drehzahl der ersten Stufe ebenfalls wieder bezeichnet. Wie ersichtlich kann dieses sowohl im Plus als auch im Minusbereich sich befinden. Mit i i ist auch angedeutet, dass hier noch mehrere Stufen eines Planetengetriebes hintereinandergeschaltet werden können, so dass hier noch günstigere Übersetzungsverhältnisse/Dreh-momente erhalten werden können. Nicht gezeigt ist in den Figuren die weiter vorn beschriebene Ausführungsform, wonach eine Hydraulikpumpe zur Versorgung des HydraulikMotors 4 von dem Hauptantrieb I angetrieben wird. Die Funktionsweise der erfin-dungsgemäßen Zerkleinerungsvorrichtung wurde weiter vorne ausreichend beschrieben, weshalb auf eine erneute Darstellung hier verzichtet werden kann.

Die Erfindung wurde zuvor anhand von Ausführungsbeispieles beschrieben. Die jetzt und mit der Anmeldung später eingereichten Ansprüche sind Versuche zur Formulierung ohne Präjudiz für die Erzielung eines weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Verwendung eines Schredders als Zerkleinerungsvorrichtung für insbesondere großformatige Materialien, mit einem Hauptantrieb (I), der eine Drehbewegung für eine Schredder-Welle (2) erzeugt, **dadurch gekennzeichnet, dass** die Drehzahl der Schredder-Welle (2) mittels eines zwischen Hauptantrieb (I) und Schredder (II) zwischengeschalteten Getriebes stufenlos veränderbar ist,
wobei als Getriebe ein Planeten-Überlagerungsgetriebe (1), bevorzugt ein hydrostatisches Überlagerungsgetriebe, vorgesehen ist,
wobei ein Hydraulik-Motor (4) für einen Überlagerungszweig (11) des Überlagerungsgetriebes (1) an dem Planeten-Überlagerungsgetriebe vorgesehen ist, der als Zusatzantriebsaggregat in zwei unterschiedlichen Drehrichtungen beaufschlagbar ist,
wobei der Überlagerungszweig (11) des Planeten-Überlagerungsgetriebes (1) ein Hohlrad (12) umfasst, an dem das Zusatzantriebsaggregat angreift,
wobei sich die Drehzahl und/oder die Drehrichtung des Hydraulik-Motors (4) als Zusatzantriebsaggregat aufgrund der Belastung des Schredders (II) verändert und die Drehzahl der Zerkleinerungsvorrichtung (II) sich in Abhängigkeit von der zu leistenden Zerkleinerungsleistung selbst regelt, und
wobei die Drehrichtung der Zerkleinerungsvorrichtung durch die unterschiedliche Beaufschlagung des Hydraulik-Motors (4) veränderbar und umkehrbar ist.

2. Verwendung eines Schredders als Zerkleinerungsvorrichtung nach Anspruch 1, **dadurch gekennzeichnet, dass** als Hauptantrieb (I) ein Verbrennungsmotor, vorzugsweise ein Dieselmotor, ein Elektromotor oder dergleichen vorgesehen ist, der eine Leistung von 130 bis 500 kW, vorzugsweise von 315 kW, und eine Drehzahl von 1500 bis 2000 Umin⁻¹ aufweist.

3. Verwendung eines Schredders als Zerkleinerungsvorrichtung nach einem der vorhergehenden Ansprüche, **dadurch gekennzeichnet, dass** der Hauptantrieb (I) eine konstante Drehzahl aufweist.

4. Verwendung eines Schredders als Zerkleinerungsvorrichtung nach einem der vorhergehenden Ansprüche 1 und 2, **dadurch gekennzeichnet, dass** die Drehzahl des Hauptantriebs (I) regelbar, insbesondere stufenlos regelbar ist.

5. Verwendung eines Schredders als Zerkleinerungsvorrichtung nach einem der vorhergehenden Ansprüche, **dadurch gekennzeichnet, dass** eine Hydraulikpumpe zur Versorgung des Hydraulik-Motors (4) mit einem Antriebsmedium vorgesehen ist.

6. Verwendung eines Schredders als Zerkleinerungsvorrichtung nach einem der vorhergehenden Ansprüche, **dadurch gekennzeichnet, dass** das Hohlrad (12) mit wenigstem einem Planetenrad (13) zusammenwirkt, welches seinerseits auf ein Zentralrad (14) wirkt.

7. Verwendung eines Schredders als Zerkleinerungsvorrichtung nach einem der vorhergehenden Ansprüche, **dadurch gekennzeichnet, dass** die Drehzahl und/oder die Drehrichtung des Hydraulik-Motor (4) als Zusatzantriebsaggregat, insbesondere durch die Erhöhung oder Reduzierung des Flüssigketisstromes des Antriebsmediums stufenlos regelbar ist.

8. Verwendung eines Schredders als Zerkleinerungsvorrichtung nach einem der vorhergehenden Ansprüche, **dadurch gekennzeichnet, dass** die Hydraulikpumpe von dem Hauptantrieb (I) angetrieben wird oder ein eigener Pumpenantrieb für die Hydraulikumpe vorgesehen ist.

9. Verwendung eines Schredders als Zerkleinerungsvorrichtung nach einem der vorhergehenden Ansprüche, **dadurch gekennzeichnet, dass** der Hydraulik-Motor (4) derart ausgebildet und angeordnet ist, dass er durch Erhöhung oder Verminderung des Drucks des Antriebsmediums auf Veränderungen des Drehmomentes bei Veränderung der Belastung des Schredders (II) reagiert.

10. Verwendung eines Schredders als Zerkleinerungsvorrichtung nach einem der vorhergehenden Ansprüche, **dadurch gekennzeichnet, dass** eine Überlastsicherung vorgesehen ist, die den Druck des Antriebsmediums überwacht und bei einem gewählten Überdruck öffnet, wobei dieser Überdruck bevorzugt ca. 400 Bar beträgt.

11. Verwendung eines Schredders als Zerkleinerungsvorrichtung nach einem der vorhergehenden Ansprüche, **dadurch gekennzeichnet, dass** das Planeten-Überlagerungsgetriebe (1) bzw. das hydrostatische Überlagerungsgetriebe als Anlaufregelgetriebe, insbesondere zum Anlaufen des Hauptantriebs (I) unter Last vorgesehen ist.

## Claims

1. Use of a shredder as a comminution device for in particular large-sized materials, having a main drive (I) which generates a rotary movement for a shredder shaft (2),
**characterised in that**
the rotational speed of the shredder shaft (2) is steplessly variable by means of a gear interposed between the main drive (I) and the shredder (II),
wherein a planetary superposition gear (1), preferably a hydrostatic superposition gear, is provided as the gear,
wherein a hydraulic motor (4) for a superposition branch (11) of the superposition gear (1) is provided on the planetary superposition gear, which can be applied as an auxiliary drive unit in two different directions of rotation,
wherein the superposition branch (11) of the planetary superposition transmission (1) comprises a ring gear (12) on which the auxiliary drive unit acts,
wherein the rotational speed and/or the direction of rotation of the hydraulic motor (4) as an auxiliary drive unit changes on account of the load of the shredder (II) and the rotational speed of the comminution device (II) adjusts itself according to the comminution performance to be provided, and
wherein the direction of rotation of the comminution device is variable and reversible by the varying application of the hydraulic motor (4).

2. Use of a shredder as a comminution device according to claim 1, **characterised in that** an internal combustion engine, preferably a diesel engine, an electric motor or the like is provided as the main drive (I), which has an output of 130 to 500 kW, preferably 315 kW, and a rotational speed of 1500 to 2000 rpm.

3. Use of a shredder as a comminution device according to any one of the preceding claims, **characterised in that** the main drive (I) has a constant rotational speed.

4. Use of a shredder as a comminution device according to any one of the preceding claims 1 and 2, **characterised in that** the rotational speed of the main drive (I) is adjustable, in particular steplessly adjustable.

5. Use of a shredder as a comminution device according to any one of the preceding claims, **characterised in that** a hydraulic pump is provided for supplying the hydraulic motor (4) with a drive medium.

6. Use of a shredder as a comminution device according to any one of the preceding claims, **characterised in that** the ring gear (12) interacts with at least one planetary gear (13), which in turn acts on a central gear (14).

7. Use of a shredder as a comminution device according to any one of the preceding claims, **characterised in that** the rotational speed and/or the direction of rotation of the hydraulic motor (4) as an auxiliary drive unit is steplessly adjustable, in particular by increasing or reducing the fluid flow of the drive medium.

8. Use of a shredder as a comminution device according to any one of the preceding claims, **characterised in that** the hydraulic pump is driven by the main drive (I) or a separate pump drive is provided for the hydraulic pump.

9. Use of a shredder as a comminution device according to any one of the preceding claims, **characterised in that** the hydraulic motor (4) is designed and arranged such that it responds to changes in torque when the load of the shredder (II) changes by means of increasing or decreasing the pressure of the drive medium.

10. Use of a shredder as a comminution device according to any one of the preceding claims, **characterised in that** an overload protection is provided which monitors the pressure of the drive medium and opens at a chosen positive pressure, wherein said positive pressure is preferably about 400 bar.

11. Use of a shredder as a comminution device according to any one of the preceding claims, **characterised in that** the planetary superposition gear (1) and/or the hydrostatic superposition gear is provided as a start-up control gear, in particular for starting the main drive (I) under load.

## Revendications

1. Utilisation d'une déchiqueteuse sous forme de dispositif de broyage pour des matériaux en particulier de grand format, comprenant un entraînement principal (I) produisant un mouvement rotatif pour un arbre de déchiqueteuse (2),
**caractérisée en ce que**
la vitesse de rotation de l'arbre de déchiqueteuse (2) est modifiable en continu au moyen d'une transmission interposée entre l'entraînement principal (I) et la déchiqueteuse (II),
une transmission superposée planétaire (1), de préférence une transmission superposée hydrostatique, faisant office de transmission,
un moteur hydraulique (4) pour une branche superposée (11) de la transmission superposée (1) étant prévu sur la transmission superposée planétaire qui peut être appliqué dans deux sens de rotation différents, en tant que l'unité de puissance auxiliaire,
la branche superposée (11) de la transmission superposée planétaire (1) comprenant une couronne dentée (12) sur laquelle vient en prise l'unité de puissance auxiliaire,
la vitesse et/ou le sens de rotation du moteur hydraulique (4) sous forme de groupe d'entraînement additionnel se modifiant en raison de la charge de la déchiqueteuse (II) et la vitesse de rotation du dispositif de broyage (II) se modifiant lui-même en fonction de la puissance de broyage à fournir et
le sens de rotation du dispositif de broyage étant modifiable et réversible par les différentes admissions du moteur hydraulique (4).

2. Utilisation d'une déchiqueteuse sous forme de dispositif de broyage selon la revendication 1, **caractérisée en ce qu'**il est prévu comme entraînement principal (I) un moteur à combustion interne, de préférence un moteur diesel, un moteur électrique ou similaire, ayant une puissance de 130 à 500 kW, de préférence de 315 kW et une vitesse de rotation de 1500 à 2000 tours/min.

3. Utilisation d'une déchiqueteuse sous forme de dispositif de broyage selon l'une quelconque des revendications précédentes, **caractérisée en ce que** l'entraînement principal (I) a une vitesse de rotation constante.

4. Utilisation d'une déchiqueteuse sous forme de dispositif de broyage selon une quelconque des revendications précédentes 1 et 2, **caractérisée en ce que** la vitesse de rotation de l'entraînement principal (I) est réglable, en particulier en continu.

5. Utilisation d'une déchiqueteuse sous forme de dispositif de broyage selon une quelconque des revendications précédentes, **caractérisée en ce qu'**une pompe hydraulique est prévue pour alimenter le moteur hydraulique (4) en moyen d'entraînement.

6. Utilisation d'une déchiqueteuse sous forme de dispositif de broyage selon une quelconque des revendications précédentes, **caractérisée en ce que** la couronne dentée (12) coopère avec au moins un engrenage planétaire (13) qui agit à son tour sur une roue centrale (14).

7. Utilisation d'une déchiqueteuse sous forme de dispositif de broyage selon une quelconque des revendications précédentes, **caractérisée en ce que** la vitesse et/ou le sens de rotation du moteur hydraulique (4) en tant que l'unité de puissance auxiliaire, sont réglables en continu, en particulier en augmentant ou en réduisant le courant de fluide du moyen d'entraînement.

8. Utilisation d'une déchiqueteuse sous forme de dispositif de broyage selon une quelconque des revendications précédentes, **caractérisée en ce que** la pompe hydraulique est entraînée par l'entraînement principal (I) ou un entraînement de pompe propre est prévu pour la pompe hydraulique.

9. Utilisation d'une déchiqueteuse sous forme de dispositif de broyage selon une quelconque des revendications précédentes, **caractérisée en ce que** le moteur hydraulique (4) est conçu et agencé de manière à réagir, par augmentation ou diminution de la pression du moyen d'entraînement, sur les modifications du couple lors du changement de charge de la déchiqueteuse (II).

10. Utilisation d'une déchiqueteuse sous forme de dispositif de broyage selon une quelconque des revendications précédentes, **caractérisée en ce qu'**il est prévu une protection contre les surcharges qui surveille la pression du moyen d'entraînement et s'ouvre à une pression positive choisie, ladite pression positive étant de préférence d'environ 400 bars.

11. Utilisation d'une déchiqueteuse sous forme de dispositif de broyage selon une quelconque des revendications précédentes, **caractérisée en ce que** la transmission superposée planétaire (1) et/ou la transmission superposée hydrostatique est prévue sous forme de commande de réglage de démarrage, en particulier pour démarrer l'entraînement principal (I) sous charge.
